# EUROPÄISCHE PATENTSCHRIFT

(11) **EP 0 957 341 B1**
(45) Veröffentlichungstag und Bekanntmachung des Hinweises auf die Patenterteilung: **06.07.2005**
(21) Anmeldenummer: 99107414.7
(22) Anmeldetag: 26.04.1999
(51) Int. Cl.: G01C 21/36, G01C 21/20

(54) **Verfahren zum Speichern von Positionsdaten**
Method for storing position data
Méthode pour stocker des données de position

(30) Priorität: 14.05.1998 DE 19821750
(43) Veröffentlichungstag der Anmeldung: 17.11.1999
(73) Patentinhaber: Nokia Corporation, 02150 Espoo (FI)
(72) Erfinder: Neukirchen, Ralph, 45772 Marl (DE); Kaikkonen, Jari, 36200 Kangsala (FI); Lempiö, Jarkko, 33720 Tampere (FI); Kauvo, Kimmo, 38200 Vammala (FI)
(74) Vertreter: TER MEER STEINMEISTER & PARTNER GbR

(56) Entgegenhaltungen:
- EP-A- 0 810 571
- WO-A-98/08055
- US-A- 5 239 700
- US-A- 5 774 828

## Beschreibung

Die Erfindung betrifft ein Verfahren zum Speichern von Positionsdaten gemäß dem Oberbegriff des Patentanspruchs 1.

Ein Verfahren dieser Art ist bereits aus der WO-A-98/08055 bekannt. Bei diesem bekannten Verfahren zum Speichern von Positionsdaten, insbesondere zur Verwendung in einem Navigations- und/oder Straßen- Informationsdienstsystem, wird die aktuelle Position mit Hilfe eines Positionsfeststellsystems erfasst, der aktuellen Position eine Benennung zugewiesen, und es wird die aktuelle Position mit der zugewiesenen Benennung so gespeichert, dass die gespeicherte Position mit Hilfe der zugeordneten Benennung auswählbar ist.

Bei herkömmlichen Navigationssystemen sibt der Fahrer vor Antritt einer Fahrt die Positionen von Start und Ziel ein, die dann von einer Telekommunikationseinheit, beispielsweise einem Mobiltelefon, zu einem zentralen Diensteanbieter übertragen werden. Dort wird ggf. unter Berücksichtigung der aktuellen Verkehrssituation eine geeignete Fahrtroute zusammengestellt und zum Endgerät des Benutzers übertragen, in dem die Daten der Fahrtroute gespeichert werden.

Um die Fahrtrouteninformation in Abhängigkeit von der jeweiligen Fahrzeugposition zur Unterstützung des Fahrers anzeigen zu können, wird die Fahrzeugposition mit Hilfe einer Koppelnavigation festgestellt oder von einem GPS-Modul geliefert.

Ferner ist bereits ein Verkehrsmformationsdienst bekannt (T-Mobil, Dienstespezifikation Verkehrsinformationsdienst, insbesondere Seite 12 und Seite 39), bei dem der Benutzer eines Fahrzeugs die aktuelle Verkehrssituation auf seinem Weg von einer Startposition zu seinem Ziel von einer Zentrale abrufen kann.

Die hierfür erforderliche Verkehrsinformationsanfrage, die von einem als Benutzereinheit dienenden Endgerät zum Beispiel über ein Funknetz zu einer Zentrale übertragen wird, setzt sich dabei im wesentlichen aus der Zielposition und der Startposition zusammen. Die Ziel- und Startpositionen müssen dabei in einem speziellen Datenformat vorliegen, das als Geocode bezeichnet wird.

Um die Verkehrsinformationsanfrage zusammenzustellen, wählt der Benutzer zunächst das Ziel aus einer im Endgerät gespeicherten Geocode-Städteliste oder aus einem persönlichen Adreßbuch aus, das im Endgerät ebenfalls gespeichert ist. Bei der Auswahl des Ziels aus dem Adreßbuch sind die Koordinaten der Adresse in den entsprechenden Geocode umzuwandeln. Anschließend erfolgt die Eingabe der Startposition, wozu der Benutzer entweder die aktuelle Position, die beispielsweise mit Hilfe eines GPS-Moduls festgestellt werden kann, als Startposition bestätigen kann, oder der Benutzer macht von der Möglichkeit Gebrauch, eine Startposition aus der Geocode-Städteliste bzw. aus seinem persönlichen Adreßbuch anzugeben, wobei wiederum die Koordinaten der Adresse aus dem Adreßbuch in den entsprechenden Geocode umzuwandeln sind.

Nachdem die vollständig zusammengestellte Verkehrsinformationsanfrage zur Zentrale übertragen wurde, wird dort aus Start- und Zielposition ein Selektionsgebiet ermittelt, für das die aktuellen Verkehrsinformationen zusammengestellt werden.

Die für das Selektionsgebiet zusammengestellten aktuellen Verkehrsinformationen werden dann zum Endgerät übertragen, dort zur Anzeige gebracht und gespeichert.

Obwohl bei diesem System die Eingabe bzw. Auswahl einer Zielposition aus einem persönlichen Adreßbuch die Benutzung des Systems insbesondere für häufig gefahrene Strecken deutlich verbessert, ist es mühselig, die Adressen in das Adreßbuch einzugeben, da die üblichen Postadressen mit Stadt, Straße, Hausnummer in Geocodes oder in einem in Geocodes umrechenbaren Positionsdatenformat gespeichert werden müssen. Dies erfordert entsprechende Landkarten und/oder Tabellen, so daß in jedem Endgerät große Datenmengen zu speichern sind oder beispielsweise über CD-ROM zugänglich sein müssen.

Der Erfindung Liest die Aufgabe zugrunde, ein Verfahren zum Speichern von Positionsdaten, insbesondere zur Verwendung in einem Navigations- und/oder Straßen-Informationsdienstsystem bereitzustellen, das das Speichern von Positionsdaten, insbesondere für die Eingabe von Positionsdaten zum Aufstellen eines elektronisch gespeicherten Adreßbuchs wesentlich vereinfacht.

Die Lösung des Aufgabe ist im kennzeichen des Anspruchs 1 angegeben. Vorteilhafte Ausgestaltungen der Erfindung sind in den Unteransprüchen beschrieben.

Erfindungsgemäß ist vorgesehen, daß der aktuellen Position bei einem Halt eine Benennung zugewiesen wird und die aktuelle Position anschließend zusammen mit dieser Benennung gespeichert wird. Auf diese Weise lassen sich Positionsdaten von Orten automatisch erfassen, an denen sich ein Benutzer eines fahrzeuggebundenden oder frei tragbaren Navigationssystems für eine gewisse Weile aufgehalten hat, um beispielsweise eine Pause zu machen oder eine Besorgung zu erledigen.

Das Verfahren ermöglicht es, die Positionsdaten jedes beliebigen Ortes, an dem sich ein Endgerät eines Navigations- oder Straßen-Informationsdienstsystems befindet, in einer Liste elektronisch zu speichern, ohne daß die Positionsdaten auf umständliche Weise eingegeben werden müssen. Somit läßt sich der Einsatz des Navigations- oder Straßen-Informationsdienstsystems wesentlich vereinfachen und benutzerfreundlicher gestalten.

Vorteilhafterweise ist dabei vorgesehen, daß zur Erfassung der aktuellen Position ein satellitengestütztes Positionsfeststellsystem, insbesondere das GPS-(Global Positioning System)-System verwendet wird.

Sollen die Positionsdaten in einem einzigen Informationsdienstsystem oder in mehreren Informationsdienstsystemen benutzt werden, die das gleiche Positionsdatenformat verwenden, so ist es zweckmäßig, wenn Positionsdaten der erfaßten Position vor dem Speichern in ein Datenformat umgerechnet werden, das für das jeweilige Straßen-Informationsdienstsystem geeignet ist.

Für die Verwendung der Positionsdaten kann es jedoch auch vorteilhaft sein, wenn die Positionsdaten der erfaßten Position in dem vom Positionsfeststellsystem gelieferten Datenformat gespeichert werden.

Sollen zum Beispiel die adreßbuchmäßiggespeicherten Positionsdaten sowohl in einem Verkehrsinformationsdienstsystem, das einen speziellen Geocode mit relativ geringer Ortsgenauigkeit verwendet, als auch in einem Navigationssystem eingesetzt werden, das eine hohe Ortsgenauigkeit fordert, so werden die von dem satellitengestützten Positionsfeststellsystem, also beispielsweise vom GPS-Modul gelieferten Positionsdaten in diesem Datenformat gespeichert. Die Umwandlung in die jeweils erforderlichen Datenformate, also in den Geocode für das Verkehrsinformatlonsdienstsystem oder in ein für das Navigationssystem geeignetes Format erfolgt dann jeweils nach Auswahl der entsprechenden Adresse.

Für die Erstellung eines benutzerspezifischen Adreßbuch ist es zweckmäßig, wenn die der aktuellen Position zuzuweisende Benennung auswählbar ist. Somit lassen sich Positionsdaten zusammen mit einem beliebigen frei vorgebbaren oder zumindest auswählbaren Namen in einer das persönliche Adreßbuch darstellenden Liste elektronisch speichern, aus der dann die Positionsdaten beliebiger gespeicherter Orte ausgewählt werden können.

Bei einer vorteilhaften Ausgestaltung ist vorgesehen, daß die Benennung über eine Eingabeeinheit eingegeben und damit ausgewählt wird.

Zweckmäßigerweise kann dabei die Benennung als alphanumerische Zeichenkette über eine Tastatur eingegeben werden. Hierdurch wird dem Benutzer die Möglichkeit eröffnet, die Bezeichnungen der jeweiligen Positionen in dem von ihm selbst zusammengestellten Adreßbuch nach einem individuellen Schema frei zu gestalten.

Die gleiche Möglichkeit zur Gestaltung seines Adreßbuchs wird dem Benutzer gegeben, wenn die Benennung als alphanumerische Zeichenkette eingegeben wird, indem die Buchstaben und Zahlen einzeln aus einer Liste ausgewählt werden.

Diese Ausgestaltung ermöglicht eine gerätetechnisch einfachere Ausbildung des vom Benutzer des Informationsdienstes verwendeten Endgeräts. Dabei ist es insbesondere möglich, daß die Auswahl der alphanumerischen Zeichen aus der Liste mittels eines Dreh-Drück-Stellers erfolgt.

Eine besonders komfortable Ausgestaltung zeichnet sich dadurch aus, daß die Benennung aus einer bestehenden Liste von Namen und/oder Bezeichnungen auswählbar ist. Dabei ist es besonders zweckmäßig, wenn die bestehende Liste ein gespeichertes Telefonbuch einer Telekommunikationseinheit ist, die zum Datenaustausch mit einer Zentrale des Informationsdienstsystems benutzt wird, wobei nach Auswahl eines Namens aus dem gespeicherten Telefonbuch als Bezeichnung der erfaßten Position deren Positionsdaten mit dem ausgewählten Telefonbucheintrag verbunden werden.

Um die Durchführung des Verfahrens weiter zu vereinfachen, kann vorgesehen sein, daß die bestehende Liste vordefinierte Begriffe umfaßt, aus denen eine Benennung ausgewählt werden kann. Hierbei werden als Benennung für bestimmte Positionsdaten Begriffe wie "Wohnung", "Arbeit", "Büro", "Freundin", "Freund", "Eltern", usw. vordefiniert, so daß der Benutzer nur einen dieser Begriffe auszuwählen braucht, um eine entsprechende Position zu bezeichnen, falls er sich die Mühe der Eingabe einer freigewählten Benennung ersparen will. Diese Vorgehensweise ist aber auch dann von Vorteil, wenn zur Durchführung des Verfahrens ein gerätetechnisch besonders einfaches Endgerät benutzt werden soll, also ein Endgerät mit einer möglichst wenig Bedienungselemente umfassenden Benutzerschnittstelle.

Um nicht jeden beliebigen kurzen Halt oder Stop während einer Fahrt oder, bei Benutzung eines tragbaren Navigationssystems, während eines Spaziergang oder einer Wanderung zu erfassen, ist es zweckmäßig, wenn die aktuelle Position zusammen mit der Benennung nur dann gespeichert wird, wenn der Halt länger als eine vorgegebene Zeitdauer währt, wobei die vorgegebene Zeitdauer einstellbar ist.

Um insbesondere beim Einsatz des Verfahrens in einer fahrzeuggebunden Benutzereinheit eines Navigations- oder Straßeninformationsdienstsystems nicht die Orte aller verkehrsbedingten Halts, die beispielsweise durch Ampeln, Bahnübergänge oder auch Staus verursacht werden, zu erfassen, ist es bei einer vorteilhaften Weiterbildung der Erfindung vorgesehen, daß für die vorgegebene Zeitdauer zum Erkennen eines Halts eines Fahrzeugs in Abhängigkeit vom Betriebszustand des Fahrzeugs unterschiedliche, einstellbare Werte auswählbar sind, um zwischen einem verkehrsbedingten und einem freiwilligen Halt zu unterscheiden. Um den Betriebszustand des Fahrzeugs zu erfassen, kann beispielsweise überprüft werden, ob der Motor läuft oder die Zündung eingeschaltet ist. Ist die Zündung eingeschaltet oder läuft der Motor, ist also das Fahrzeug nicht geparkt, so wird die vorgegebene Zeitdauer auf einen großen oder sehr großen Wert, z. B. auf unendlich, gesetzt, so daß die Erfassung verkehrsbedingter Halts vollständig ausgeschlossen werden kann.

Sollen jedoch unabhängig vom Betriebszustand alle Orte, an denen ein Fahrzeug längere Zeit gehalten hat, in ein elektronisches Fahrtenbuch eingetragen werden, so kann die vorgegebene Zeitdauer auch auf einen solchen Wert gesetzt werden, der es gestattet, daß längere Stops während eines Staus erfaßt und die zugeordneten Positionsdaten gespeichert werden, um nicht nur Zeit und Ort von Start und Ziel sondern auch Zwischenhalts zu erfassen und den Fahrverlauf genau zu dokumentieren.

Um das Auffinden gespeicherter Positionsdaten zu erleichtern, ist es vorteilhaft, wenn die zusammen mit der aktuellen Position gespeicherte Benennung den zugehörigen Halt kennzeichnende Information, insbesondere den Zeitpunkt und die Art des Halts kennzeichnende Daten umfaßt.

Eine besonders zweckmäßige Ausgestaltung der Erfindung zeichnet sich dadurch aus, daß die Position eines Halts zusammen mit der zugewiesen Benennung in einer Datenbank vom Ringspeichertyp gespeichert wird, wobei in der Datenbank die Daten des ältesten Halts, also dessen Position und die ihn kennzeichnende Information, mit den Daten des letzten, also des jüngsten Halts überschrieben werden, wenn die Anzahl der erfaßten Halts die Anzahl der verfügbaren Speicherplätze übersteigt.

Um die gespeicherten Daten der letzten Halts auf einfache Weise für ein benutzerdefiniertes persönliches Adreßbuch übernehmen zu können, ist erfindungsgemäß vorgesehen, daß die gespeicherten Daten eines erfaßten Halts auswählbar sind und daß die Positionsdaten des ausgewählten Halts zusammen mit einer frei wählbaren, insbesondere frei eingebbaren Benennung speicherbar sind.

Die Erfindung wird im folgenden beispielsweise anhand der Zeichnung näher erläutert. In dieser zeigt:
**Figur 1** ein vereinfachtes schematisches Schaltbild einer Benutzereinheit zur Verwendung als Endgerät in einem Informationsdienstsystem,
**Figur 2** mögliche Darstellungen auf einer Anzeigeeinheit beim Eingeben von Positionsdaten,
**Figur 3** mögliche Darstellungen auf einer Anzeigeeinheit beim Eingeben von Positionsdaten mit erweiterten Möglichkeiten und
**Figur 4** mögliche Darstellungen auf einer Anzeigeeinheit beim Anfordern von Verkehrsinformationen von einem Verkehrsinformationsdienst.

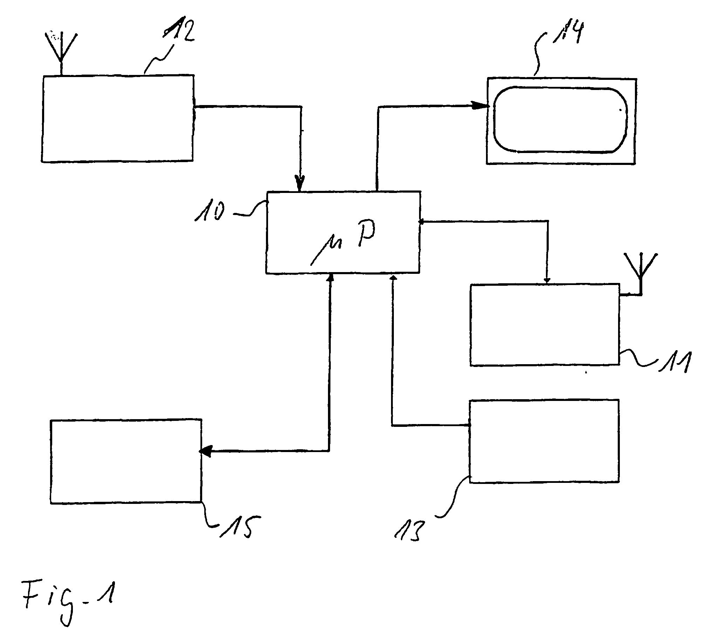

Wie die Figur 1 zeigt, weist eine als Endgerät in einem Informationsdienstsystem einsetzbare Benutzereinheit eine beispielsweise als Mikroprozessor ausgebildete zentrale Rechen- und Steuereinheit 10 auf, an die als Telekommunikationseinheit ein Mobiltelefon 11 zur Kommunikation mit einer Zentrale eines Straßen-Informationsdienstsystems und beispielsweise ein GPS-Modul 12 als Ortungsmodul eines satellitengestützten Positionsfeststellsystems angeschlossen sind. Zur Bedienung der Benutzereinheit ist eine Eingabeeinheit 13 vorgesehen, die beispielsweise eine vollständige alphanumerische Tastatur, ein Zwölftastenblock, wie er auch bei Telefonen, inbesondere bei Mobiltelefonen verwendet wird, oder im einfachsten Fall ein Dreh-Drück-Steller sein kann. Es ist auch möglich, anstelle einer gesonderten Eingabeeinheit 13 die Tastatur des Mobiltelefons 11 zu verwenden. Zur Anzeige von Systemrückmeldungen während der Bedienung der Benutzereinheit und insbesondere während der Vorbereitung der Kommunikation mit der Zentrale des Informationsdienstsystems sowie zur Anzeige der vom Informationsdienstsystem zur Benutzereinheit übertragenen und dort gespeicherten Information ist zweckmäßigerweise eine Anzeigeeinheit 14 mit der zentralen Rechen- und Steuereinheit 10 verbunden. Die Anzeigeeinheit 14 kann dabei beispielsweise ein als Flüssigkristallanzeige ausgebildeter Bildschirm sein.

Außerdem ist ein Adreßbuch-Speicher 15 mit der zentralen Rechen- und Steuereinheit 10 verbunden, in dem eine benutzerdefinierte Liste von Zielpositionen oder -orten mit vorzugsweise benutzerdefinierten Ortsbezeichnungen und Positionsdaten gespeichert ist. Diese Liste wird beispielsweise wie ein Adreßbuch analog zu einem Telefonbuch verwaltet. Die im elektronischen Adreßbuch unter einer Ortsbezeichnung gespeicherten Positionsdaten können später bei der Anforderung von Verkehrsinformationen von einem Verkehrsinformationsdienst oder bei der Anforderung von Streckeninformationen von einem Navigationsdienst benutzt werden.

Beim Betrieb der Benutzereinheit wird dem Benutzer neben einer Vielzahl von Betriebsfunktionen über einen Menüpunkt auf dem Bildschirm der Anzeigeeinheit 14 oder über einen Eingabeknopf die Möglichkeit angeboten, die aktuelle Position der Benutzereinheit bzw. des Fahrzeugs, in dem die Benutzereinheit installiert ist, zu erfassen und zusammen mit einer Bezeichnung im Adreßbuchspeicher 15 abzulegen.

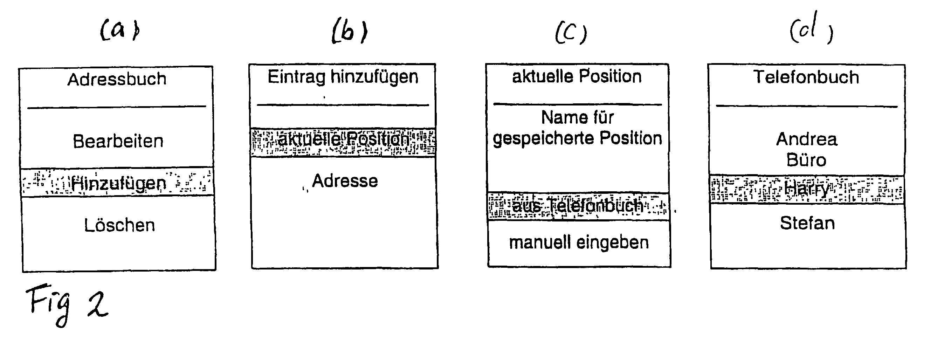

Wird diese Möglichkeit, die im folgenden beispielsweise als "Adreßbuch" bezeichnet wird, aufgerufen, so erscheint beispielsweise, wie in Figur 2(a) dargestellt, ein Menüfenster "Adreßbuch" mit den Menüpunkten "bearbeiten", "hinzufügen" und "löschen". Wird hieraus zum Eingeben von Positionsdaten gemäß dem erfindungsgemäßen Verfahren der Menüpunkt "hinzufügen" ausgewählt, so erscheint beispielsweise auf dem Bildschirm die in Figur 2(b) dargestellte Anzeige.

Wählt der Benutzer den Menüpunkt "aktuelle Position", so wird daraufhin die aktuelle Position erfaßt, indem die aktuellen Positionsdaten, die vom GPS-Modul 12 geliefert werden, erfaßt und gespeichert werden. Daraufhin wird der Benutzer aufgefordert, eine Benennung für die aktuelle Position auszuwählen. Dazu kann beispielsweise auf dem Bildschirm der Anzeigeeinheit 14 die in Figur 2(c) dargestellte Anzeige des Menüpunkts "aktuelle Position" dargestellt werden, die dem Benutzer die Möglichkeit bietet, die Bezeichnung oder den Namen für die gespeicherte Position entweder aus einer vorgegebenen Liste, im vorliegenden Fall aus einem im Mobiltelefon 11 vorgesehenen Telefonbuch, auszuwählen, wozu der Menupunkt "aus Telefonbuch" vorgesehen ist, oder entsprechend dem Menüpunkt "manuell eingeben" von Hand einzugeben.

Wird, wie in Figur 2(c) und (d), die Möglichkeit ausgewählt, den Namen für die gespeicherte Position aus dem Telefonbuch auszuwählen, so erscheinen auf dem Bildschirm die Namen der einzelnen Telefonbucheinträge, aus denen dann der entsprechende Name als Bezeichnung für die Position ausgewählt werden kann.

Für die manuelle Eingabe einer Bezeichnung für die gespeicherte Position, bei der der Name oder die Bezeichnung als alphanumerische Zeichenkette je nach Ausbildung der Eingabeeinheit 13 über eine vollständige alphanumerische Tastatur, einen Zwölftastenblock oder im einfachsten Fall mittels eines Dreh-Drück-Stellers eingegeben wird, kann auch eine Liste von vordefinierten Wörtern zur Auswahl einer Bezeichnung für die aktuelle Position angeboten werden.

Nach der Auswahl der Bezeichnung für die aktuelle Position werden die Positionsdaten der aktuellen Position zusammen mit der ausgewählten Bezeichnung im Adreßbuch-Speicher 15 so gespeichert, daß sie für die Verwendung im Informationsdienstsystem auswählbar ist.

Die Positionsdaten werden dabei entweder in dem vom GPS-Modul 12 gelieferten Datenformat als Längen- und Breitengradangabe gespeichert oder vorher in ein Datenformat umgerechnet, das für das jeweilige Informationsdienstsystem geeignet ist.

Soll das gespeicherte elektronische Adreßbuch für verschiedene Informationsdienstsysteme verwendet werden, beispielsweise für ein Verkehrsinformationsdienstsystem, das für die Positionsdaten einen speziellen Geocode erfordert, und für ein Navigationsdienstsystem, das die Position mit der vom GPS-Kopplungsmodul 12 gelieferten relativ hohen Genauigkeit als Längen- und Breitengradangabe benötigt, werden die Positionsdaten in der vom GPS-Kopplungsmodul 12 gelieferten Form im Speicher abgelegt.

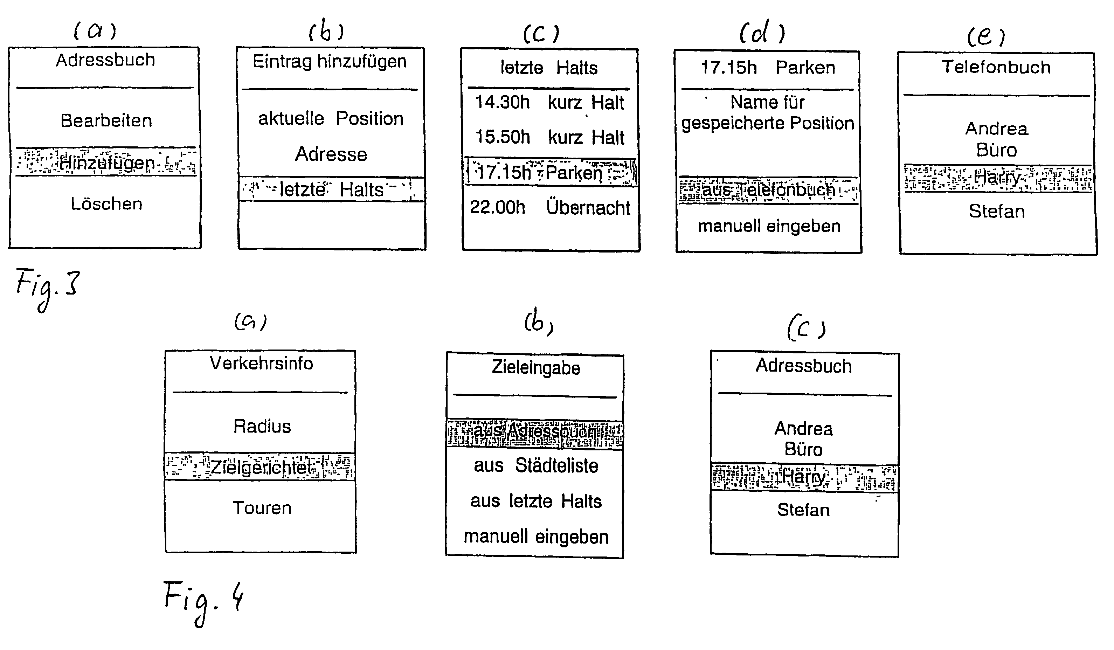

Im folgenden wird der Einsatz des Adreßbuchs bei der Anforderung von Verkehrsinformationen anhand von Figur 4 beschrieben. Wünscht der Kunde eines Verkehrsinformationsdienstsystems Verkehrsinformationen, so wählt er über einen entsprechenden Menüpunkt oder Druckknopf die Funktion "Verkehrsinfo", woraufhin beispielsweise das in Figur 4(a) dargestellte Menüfenster auf dem Bildschirm der Anzeigeeinheit 14 erscheint. Wird aus den angebotenen Menüpunkten dann der Menüpunkt "Zielgerichtet" ausgewählt, so wird der Benutzer entsprechend Figur 4(b) zur Zieleingabe aufgefordert, wobei er zwischen einer manuellen Eingabe sowie dem Auswählen des Ziels aus einer Städteliste, aus seinem eigenen Adreßbuch oder aus einer unten näher erläuterten Liste der letzten Halts wählen kann.

Wählt er zur Zieleingabe sein selbstzusammengestelltes Adreßbuch aus, so werden ihm die Adreßbucheinträge zur Auswahl angeboten, wie in Figur 4(c) dargestellt ist. Nach Auswahl eines dieser Adreßbucheinträge werden die unter der ausgewählten Bezeichnung gespeicherten Positionsdaten für den Aufbau einer Verkehrsinformationsanforderungsanfrage, die von der Benutzereinheit vorzugsweise über das Mobiltelefon zur Zentrale des Verkehrsinformationsdiensts übertragen wird, verwendet. Als Startposition wird dabei entweder die vom GPS-Modul gelieferte aktuelle Position der Benutzereinheit oder eines Fahrzeugs, in dem die Benutzereinheit montiert ist, oder eine ebenfalls frei auswähl- und eingebbare Position verwendet.

Nach dem Zusammenstellen der Informationsanforderungsanfrage wird diese über das Mobiltelefon 11 zur Zentrale des Informationsdienstsystems übertragen und dort bearbeitet. Die angeforderte Verkehrsinformation wird dann gesendet, von der Benutzereinheit empfangen und gespeichert, so daß die Verkehrsinformationen auf der Anzeigeeinheit 14 angezeigt werden können.

Die Anforderung von Streckeninformation für eine Fahrtroute in einem Navigationssystem erfolgt in entsprechender Weise.

Es ist vorgesehen, daß eine Benutzereinheit, die als Endgerät eines Navigations- und/oder Straßen-Informationsdienstsystems dient, fortlaufend überprüft, ob sich die Benutzereinheit bewegt oder nicht. Hierzu werden Positionsdaten der Benutzereinheit überwacht, die beispielsweise von dem GPS-Modul 12 geliefert werden. Umfaßt die Benutzereinheit ein Mobiltelefon 11, wie in Figur 1 dargestellt, so können die Positionsdaten auch dadurch ermittelt werden, daß das Mobiltelefon 11 mit wenigstens zwei, vorzugsweise drei verschiedenen Basisstationen, deren Positionen bekannt sind, kommuniziert, um dann aus den Laufzeiten der Sende- und Empfangssignale den Abstand zu den Basisstationen zu berechnen, um dann daraus auf die aktuelle Position zu berechnen.

Um festzustellen, ob sich die Benutzereinheit, die in einem Fahrzeug montiert sein kann, die aber auch eine tragbare, beispielsweise in einem Mobiltelefon integrierte Benutzereinheit eines Navigationssystems sein kann, zusammen mit dem Fahrzeug, bzw. dem Benutzer bewegt oder nicht, werden in regelmäßigen Abständen gelieferte aktuelle Positionsdaten mit den zuletzt empfangenen Positionsdaten verglichen. Ergibt der Vergleich, daß die aktuellen Positionsdaten nicht mit den zwischengespeicherten Positionsdaten übereinstimmen, so heißt das, daß sich die Benutzereinheit bewegt. In diesem Fall werden die aktuellen Positionsdaten anstelle der bisherigen gespeicherten Positionsdaten als letzte Positionsdaten zwischengespeichert.

Bei dem Vergleich kann eine gewisse Schwankungsbreite der Positionsdaten berücksichtigt werden, um auszuschließen, daß Änderungen der Positionsdaten, die innerhalb eines Fehler- oder Toleranzbereichs liegen, eine vermeintliche Bewegung der Benutzereinheit vortäuschen, obwohl diese tatsächlich keine Ortsveränderung durchführt.

Wird festgestellt, daß die aktuellen Positionsdaten den gespeicherten letzten Positionsdaten entsprechen, so wird eine Stoppuhrfunktion gestartet, um die Dauer eines Halts, also die Zeitdauer zu ermitteln, während der keine Positionsänderung der Benutzereinheit auftritt. Die Stoppuhrfunktion, also die Ermittlung der zeitlichen Länge eines Halts kann beispielsweise mit Hilfe eines Haltedauerzählers durchgeführt werden, der während der Bewegung der Benutzereinheit auf Null gehalten wird und der jeweils beim Feststellen der Übereinstimmung zwischen den neu erfaßten aktuellen Positionsdaten mit den gespeicherten letzten Positionsdaten um Eins erhöht wird.

Nachdem der Haltedauerzähler um eins erhöht wurde, wird beispielsweise als nächstes überprüft, ob der Zählwert des Haltedauerzählers größer oder gleich einem vorgegebenen Schwellenwert ist, der einer bestimmten einstellbaren Zeitdauer entspricht. Ist der Zählwert des Haltedauerzählers kleiner als der vorgegebene Schwellenwert, ist also die Zeitdauer des aktuellen Halts kleiner als die vorgegebene Zeitdauer, so wird dieser Halt noch nicht als solcher erfaßt und das Verfahren vergleicht weiter die fortlaufend gelieferten Positionsdaten mit den gespeicherten letzten Positionsdaten.

Durch die Vorgabe einer Zeitdauer, die entweder fest auf einen geeigneten vorgegebenen Wert eingestellt wird oder die vom Benutzer einstellbar ist, wird erreicht, daß z. B. beim Einsatz des Verfahrens in einer in einem Fahrzeug installierten Benutzereinheit relativ kurze Ampelstops oder dergleichen nicht als Halts erfaßt werden. Die Eingabe einer entsprechenden Zeitdauer ist insbesondere dann sinnvoll, wenn die Benutzereinheit eine tragbare Navigationseinheit ist, die beim Gehen des Benutzers nur eine relativ langsame Ortsänderung erfährt, so daß sonst möglicherweise ein Halt erkannt wird, obwohl der Benutzer sich ständig weiter bewegt hat.

Wird bei dem Vergleich des Zählwerts des Haltedauerzählers mit dem Schwellenwert, also bei dem Vergleich der bisher verstrichenen Haltedauer mit der vorgegebenen Zeitdauer festgestellt, daß die bisherige Haltdauer größer oder gleich der vorgegebenen Zeitdauer ist, so wird als nächstes geprüft, ob die aktuellen Positionsdaten, die den zwischengespeicherten letzten Positionsdaten entsprechen, bereits zusammen mit einer geeigneten Benennung in einer Liste oder Datenbank gespeichert sind. Sind die aktuellen Positionsdaten noch nicht gespeichert, so werden sie in der Liste zusammen mit einer entsprechenden Benennung gespeichert. Die Benennung besteht dabei aus den entsprechenden Halt kennzeichnenden Informationen, wie beispielsweise dem Zeitpunkt des Halts, der Länge des Halts und der Art des Halts. Der Zeitpunkt kann dabei in einem geeigneten Format gespeichert werden. Beispielsweise ist es möglich, Tag und Uhrzeit des Anfangs und/oder des Endes des Halts anzugeben. Die Art des Halts kann beispielsweise über die Dauer charakterisiert werden und als "kurzer Halt", "langer Halt", "Parken", "Übernachtaufenthalt" oder dergleichen gekennzeichnet sein.

Die Speicherung der erfaßten Halts zusammen mit den jeweiligen eine Benennung darstellenden Informationen erfolgt zweckmäßigerweise in einer Liste oder Datenbank vom Ringspeichertyp, also in einem Speicher mit einer festen Anzahl von Speicherplätzen für entsprechende Datensätze, bei dem, wenn alle für die Liste oder Datenbank zur Verfügung stehenden Speicherplätze belegt sind, zur Speicherung eines neuen Datensatzes jeweils der Speicherplatz verwendet wird, auf dem der am längsten gespeicherte Datensatz gespeichert ist. Auf diese Weise können also bei einem z. B. 20 Speicherplätze aufweisenden Ringspeicher die Positionsdaten mit entsprechenden Informationen der letzten 20 Halts gespeichert werden.

Die Verwendung einer derartigen Speicherstruktur hat den Vorteil, daß nach Feststellen eines Halts zur Überprüfung, ob die dazugehörigen Positionsdaten bereits gespeichert sind oder nicht, nur jeweils der Speicherplatz überprüft werden muß, in den zuletzt Positionsdaten eingeschrieben wurden.

Die beschriebene Überwachung wird zweckmäßiger Weise so lange fortgesetzt, bis eine Ortsänderung der Benutzereinheit und damit ein Ende des Halts festgestellt wurde. Nach Beendigung eines Halts wird der Haltedauerzähler auf Null zurückgesetzt und die Überwachung der örtlichen Bewegung der Benutzereinheit wird fortgesetzt. Während der Überwachung ein- und desselben Halts werden die Dauer des Halts und in Abhängigkeit davon auch die Art des Halts fortlaufend aktualisiert, so daß nach Beendigung des Halts die diesen charakterisierenden Daten zusammen mit den Positionsdaten des Ortes, an dem sich die Benutzereinheit während des Halts befunden hat, gespeichert ist. Diese Erfassung der Positionsdaten eines Halts erfolgt Benutzerunabhängig.

Bei einer tragbaren Benutzereinheit kann zur Erkennung eines Halts auch vorgesehen sein, daß ein Haltedauerzähler durch einen Bewegungs- oder Erschütterungssensor zurückgesetzt wird, der auf die bei der Fortbewegung auftretenden Bewegungen und/oder Erschütterungen anspricht. Wird das erfindungsgemäße Verfahren mit einer in einem Kraftfahrzeug installierten Benutzereinheit eingesetzt, so ist es grundsätzlich denkbar, daß auf einen Haltedauerzähler verzichtet wird und das ein Halt immer dann registriert wird, wenn der Motor des Fahrzeugs und/oder die Zündung abgeschaltet wird.

Beabsichtigt ein Benutzer die Positionsdaten eines Orts, an dem er eine Pause gemacht hat, also beispielsweise den Ort eines Restaurants, in dem er während einer Überlandfahrt gegessen hat, in sein Adreßbuch zu übernehmen, so kann er mit Hilfe der Eingangs beschriebenen Adreßbuchfunktion zunächst, wie in Figur 3(a) gezeigt, den Menüpunkt "Hinzufügen" auswählen. Daraufhin werden ihm wie in Figur 3(b) angedeutet ist, verschiedene Möglichkeiten, u. a. auch die Auswahl aus der Liste der letzten Halts angeboten. Wählt er den Menüpunkt "letzte Halts", so werden die letzten Halts auf einer Anzeigeeinheit angezeigt, wie in Figur 3(c) dargestellt ist. Nach der Auswahl des gewünschten Halts wird dann entsprechend Figur 3(d) abgefragt, wie ein Name für die in das Adreßbuch zu übernehmende Position eingegeben werden soll. Wie oben beschrieben, wird auch hier wiederum das Telefonbuch gewählt.

Es ist jedoch auch möglich, statt der Übernahme der Bezeichnung für die zu speichernde Position aus dem Telefonbuch eine manuelle Eingabe zu verwenden oder eine Bezeichnung aus einer vorgegebenen Liste auszuwählen.

Um die in der beschriebenen Weise erfaßten und gespeicherten Positionen der letzten Halts für Navigationszwecke zu nutzen, kann auf die vorzugsweise ringspeicherartig gespeicherte Liste der letzten Halts genauso zugegriffen werden, wie auf ein Adreßbuch oder eine Städteliste.

Neben dem Einsatz der fortlaufend überwachten Halts für Navigationszwecke können die in der beschriebenen Weise ermittelten Daten der einzelnen Halts auch für ein elektronisches Fahrtenbuch verwendet werden, das automatisch die einzelnen Fahrten mit den relevanten Unterbrechungen registriert.

Beim Einsatz in einem Fahrzeug ist es dabei zweckmäßig, daß für die Entscheidung, ob ein Halt zu registrieren ist oder nicht, nicht nur die Änderung von Positionsdaten überwacht wird, sondern auch der Betriebszustand des Fahrzeugs. Im einfachsten Fall kann davon ausgegangen werden, daß solange der Motor läuft, kein Halt vorliegt, der eine Pause oder eine Unterbrechung der Fahrt darstellt und registriert werden soll. In diesem Fall braucht beispielsweise die Überwachung nicht fortlaufend durchgeführt zu werden, sondern kann in Abhängigkeit vom Betriebszustand des Motors bei dessen Ausschalten gestartet werden. Der Überwachungsalgorithmus läßt sich dann entsprechend vereinfachen.

Es ist jedoch auch möglich, eine fortlaufende Überwachung durchzuführen und in Abhängigkeit vom Betriebszustand des Fahrzeugs die vorgebbare Zeitdauer auf einen relativ großen Wert zu setzen, so daß zwar Ampelstops oder auch Wartezeiten an Bahnübergängen nicht als Stops oder Halts erfaßt werden, daß jedoch längere staubedingte Halts auch dann registriertwerden, wenn der Fahrer beispielsweise im Winter den Motor trotz stehenden Fahrzeugs weiterlaufen läßt, um die Fahrzeugheizung in Gang zu halten. In diesem Fall kann dann, insbesondere wenn die so erfaßten Positionsdaten eines Halts für ein elektronisches Fahrtenbuch gespeichert werden, der Betriebszustand des Fahrzeugs als weiteres Kennzeichen für den Halt miterfaßt und gespeichert werden.

Das erfindungsgemäße Verfahren eröffnet eine Vielzahl von zusätzlichen Einsatzmöglichkeiten eines Navigationssystems.

Befindet sich beispielsweise ein Fahrer mit seinem Fahrzeug, in dem ein das erfindungsgemäße Verfahren nutzendes Navigationssystem installiert ist, in einer fremden Stadt und hat dort ein geeignetes Parkhaus gefunden, von dem aus er seine Besorgungen in der Stadt leicht ausführen kann, so braucht er, wenn er dieses Parkhaus wiederfinden will, nur den entsprechenden Halt aus der Liste der letzten Halts auszuwählen und als Zielposition für die Fahrtroutenbestimmung einzugeben.

Eine andere Möglichkeit besteht beispielsweise bei einer tragbaren Benutzereinheit eines Navigationssystems darin, daß ein Benutzer z. B. ein Café in einer fremden Stadt schnell wiederfinden kann, falls er bemerkt, daß er dort etwas vergessen hat. Auch in diesem Fall braucht er nur in der Liste der letzten Halts zu blättern und den entsprechenden Halt für die Zieleingabe auszuwählen.

Außerdem besteht die Möglichkeit, falls ihm das Café besonders gut gefallen hat, die entsprechenden Ortsdaten auf einfache Weise in sein persönliches Adreßbuch mit einer geeigneten individuellen Bezeichnung zu übernehmen.

Ein besonders vorteilhafter Einsatz des erfindungsgemäßen Verfahrens ergibt sich, wenn ein Benutzer nicht nur in seinem Fahrzeug ein entsprechendes Navigationssystem installiert hat sondern auch ein Mobiltelefon besitzt, das mit einem derartigen Navigationssystem ausgerüstet ist. In diesem Fall kann vorgesehen sein, daß er, wenn er beispielsweise in einer fremden Stadt den Weg zu seinem Fahrzeug nicht mehr zurückfindet, einfach mit Hilfe seines Mobiltelefons die Navigationseinheit seines Fahrzeugs anruft, dort die gespeicherten Positionsdaten des letzten Halts, das ist die Position, an der das Fahrzeug derzeit parkt, abfragt und dann als Zielposition in der Navigationseinheit seines Mobiltelefons einsetzt, um sich zu seinem Fahrzeug zurückführen zu lassen.

Um die Erfassung des letzten Halts noch einfacher nutzen zu können, kann beispielsweise vorgesehen sein, daß die Liste der letzten Halts und/oder der als letzter darin gespeichertejüngste letzte Halt unmittelbar per Knopfdruck abgerufen und als Zieleingabe für ein Navigationssystem benutzt werden kann.

Die Positionsdaten der letzten Halts können zusammen mit den sie charakterisierenden Informationen in jedem geeigneten Format gespeichert werden.

Dabei können die Datensätze für die einzelnen Halts ähnlich wie sogenannte in der Telekommunikation benutzte Kontaktkarten gestaltet sein. Werden die Positionsdaten in Form von sogenannten Letzter-Halt-Positionskarten gespeichert, so kann ein entsprechender Letzter-Halt-Positionskartengenerator vorgesehen sein, der, sobald ein Halt erfaßt wurde, eine entsprechende Letzte-Halt-Positionskarte erzeugt, in der die Positionsdaten zusammen mit den den Halt charakterisierenden Daten, wie Tag und Zeit, Länge des Halts und Art des Halts gespeichert wird. Ein derartiger Letzter-Halt-Positionskartengenerator läßt sich dabei auch verwenden, um eine aktuelle Position zu speichern ohne das ein Halt vorliegt, falls hierfür ein entsprechendes Aktivierungsmittel vorgesehen ist. Ein derartiges Aktivierungsmittel kann beispielsweise ein einfacher Knopf oder ein Betätigungsknopf sein, dessen Funktion softwaremäßig eingestellt werden kann.

Um das Blättern oder Suchen in einer "Letzte-Halt-Liste" zu erleichtern, kann vorgesehen sein, daß mit Hilfe eines entsprechenden Programms Filter- und Sortierfunktionen ausgeführt werden können, die es beispielsweise ermöglichen, die einzelnen Halts nicht nur chronologisch, wie sie in einem ringartigen Speicher gespeichert sind, sondern beispielsweise auch nach der Art des Halts sortiert anzuzeigen. Dabei ist es beispielsweise möglich nur kurze Halts anzeigen zu lassen oder nur solche Halts, bei denen ein Übernachtaufenthalt stattfand.

Ferner ist es denkbar, daß bestimmte ausgewählte Positionsdaten eines Halts in einem geeigneten Format, also beispielsweise entsprechend einem Kontaktkartenformat in einem ähnlich ausgebildeten letzter-Halt-Positionskartenformat an einen Dienstanbieter übertragen werden, der die jeweiligen Positionsdaten mit bekannten Positionsdaten z. B. für Restaurants, Hotels, Straßenkreuzungen usw. vergleicht und falls eine Übereinstimmung festgestellt wird, die entsprechende letzter-Halt-Positionskarte mit einer neuen oder zusätzlichen Bezeichnung zurück überträgt.

## Patentansprüche

1. Verfahren zum Speichern von Positionsdaten, insbesondere zur Verwendung in einem Navigations- und/oder Straßen-Informationsdienstsystem, bei dem
- die aktuelle Position mit Hilfe eines Positionsfeststellsystems erfaßt wird,
- der aktuellen Position eine Benennung zugewiesen wird, und
- die aktuelle Position mit der zugewiesenen Benennung so gespeichert wird, daß die gespeicherte Position mit Hilfe der zugeordneten Benennung auswählbar ist, **dadurch gekennzeichnet, daß** der aktuellen Position die Benennung bei einem Halt zugewiesen wird.

2. Verfahren nach Anspruch 1, **dadurch gekennzeichnet, daß** zur Erfassung der aktuellen Position ein satellitengestütztes PositionsfeststellSystem, insbesondere das GPS-(Global Positioning System)-System verwendet wird.

3. Verfahren nach Anspruch 1 oder 2, **dadurch gekennzeichnet, daß** Positionsdaten der erfaßten Position vor dem Speichern in ein Datenformat umgerechnet werden, das für die weitere Verwendung, insbesondere in einem jeweiligen Straßen-Informationsdienst-System geeignet ist.

4. Verfahren nach Anspruch 1 oder 2, **dadurch gekennzeichnet, daß** die Positionsdaten der erfaßten Position in dem vom Positionsfeststellsystem gelieferten Datenformat gespeichert werden.

5. Verfahren nach Anspruch 1 bis 4, **dadurch gekennzeichnet, daß** die der aktuellen Position zuzuweisende Benennung auswählbar ist.

6. Verfahren nach Anspruch 5, **dadurch gekennzeichnet, daß** die Benennung über eine Eingabeeinheit eingegeben und damit ausgewählt wird.

7. Verfahren nach Anspruch 6, **dadurch gekennzeichnet, daß** die Benennung als alphanumerische Zeichenkette über eine Tastatur eingegeben wird.

8. Verfahren nach Anspruch 6, **dadurch gekennzeichnet, daß** die Benennung als alphanumerische Zeichenkette eingegeben wird, indem die Buchstaben und Zahlen einzeln aus einer Liste ausgewählt werden.

9. Verfahren nach Anspruch 8, **dadurch gekennzeichnet, daß** die Auswahl der alphanumerischen Zeichen aus der Liste mittels eines Dreh-Drück-Stellers erfolgt.

10. Verfahren nach einem der vorstehenden Ansprüche, **dadurch gekennzeichnet, daß** die Benennung aus einer bestehenden Liste von Namen und/oder Bezeichnungen auswählbar ist.

11. Verfahren nach Anspruch 10, **dadurch gekennzeichnet, daß** die bestehende Liste ein gespeichertes Telefonbuch einer Telekommunikationseinheit (11) ist, die zum Datenaustausch mit einer Zentrale des Informationsdienstsystems benutzt wird.

12. Verfahren nach Anspruch 11, **dadurch gekennzeichnet, daß** nach Auswahl eines Namens aus dem gespeicherten Telefonbuch als Bezeichnung der erfaßten Position deren Positionsdaten mit dem ausgewählten Telefonbucheintrag verbunden werden.

13. Verfahren nach Anspruch 10, **dadurch gekennzeichnet, daß** die bestehende Liste vordefinierte Begriffe umfaßt, aus denen eine Benennung ausgewählt werden kann.

14. Verfahren nach Anspruch 1, **dadurch gekennzeichnet, daß** die aktuelle Position zusammen mit der Benennung nur dann gespeichert wird, wenn der Halt länger als eine vorgegebene Zeitdauer währt.

15. Verfahren nach Anspruch 14, **dadurch gekennzeichnet, daß** die vorgegebene Zeitdauer einstellbar ist.

16. Verfahren nach Anspruch 14 oder 15, **dadurch gekennzeichnet, daß** für die vorgegebene Zeitdauer zum Erkennen eines Halt eines Fahrzeugs in Abhängigkeit vom Betriebszustand des Fahrzeugs unterschiedliche, einstellbare Werte auswählbar sind, um zwischen einem verkehrsbedingten und einem freiwilligen Halt zu unterscheiden.

17. Verfahren nach einem der Ansprüche 1 bis 16, **dadurch gekennzeichnet, daß** die zusammen mit der aktuellen Position gespeicherte Benennung den zugehörigen Halt kennzeichnende Information umfaßt.

18. Verfahren nach Anspruch 17, **dadurch gekennzeichnet, daß** die den Halt kennzeichnende Information den Zeitpunkt und die Art des Halts kennzeichnende Daten umfaßt.

19. Verfahren nach einem der Ansprüche 1 bis 18, **dadurch gekennzeichnet, daß** die Position eines Halts zusammen mit der zugewiesen Benennung einer Datenbank vom Ringspeichertyp gespeichert wird.

20. Verfahren nach Anspruch 19, **dadurch gekennzeichnet, daß** in der Datenbank die Daten des ältesten Halts, also dessen Position und die ihn kennzeichnende Information, mit den Daten des letzten, also des jüngsten Halts überschrieben werden, wenn die Anzahl der erfaßten Halts die Anzahl der verfügbaren Speicherplätze übersteigt.

21. Verfahren nach einem der Ansprüche 1 bis 20, **dadurch gekennzeichnet, daß** die gespeicherten Daten eines erfaßten Halts auswählbar sind und daß die Positionsdaten des ausgewählten Halts zusammen mit einer frei wählbaren, insbesondere frei eingebbaren Benennung speicherbar sind.

## Claims

1. Method for storing position data, in particular for use in a navigation and/or road information service system in which
- the current position is detected with the aid of a position-finding system,
- the current position is allocated a title, and
- the current position is stored with the allocated title such that the stored position can be selected with the aid of the associated title, **characterized in that** the current position is allocated a title when stationary.

2. Method according to Claim 1, **characterized in that** a satellite-supported position-finding system, in particular the GPS (Global Positioning System) is used to detect the current position.

3. Method according to Claim 1 or 2, **characterized in that** position data for the detected position are converted, before being stored, into a data format which is suitable for further use, in particular in a respective road information service system.

4. Method according to Claim 1 or 2, **characterized in that** the position data for the detected position are stored in the data format provided by the position-finding system.

5. Method according to Claims 1 to 4, **characterized in that** it is possible to select the title to be allocated to the current position.

6. Method according to Claim 5, **characterized in that** the title is entered via an input unit, and is thus selected.

7. Method according to Claim 6, **characterized in that** the title is entered as an alphanumeric character string via a keyboard.

8. Method according to Claim 6, **characterized in that** the title is entered as an alphanumeric character string, **in that** the letters and numbers are selected individually from a list.

9. Method according to Claim 8, **characterized in that** the alphanumeric characters are selected from the list by means of a turn-and-push controller.

10. Method according to one of the preceding claims, **characterized in that** the title can be selected from an existing list of names and/or designations.

11. Method according to Claim 10, **characterized in that** the existing list is a stored telephone directory of a telecommunications unit (11) which is used for data interchange with a control centre of the information service system.

12. Method according to Claim 11, **characterized in that** after selecting a name from the stored telephone directory as a designation of the detected position, its position data are linked to the selected telephone directory entry.

13. Method according to Claim 10, **characterized in that** the existing list comprises predefined terms from which a title can be selected.

14. Method according to Claim 1, **characterized in that** the current position, together with the title, is stored only when the stop lasts for longer than a predetermined time period.

15. Method according to Claim 14, **characterized in that** the predetermined time period is adjustable.

16. Method according to Claim 14 or 15, **characterized in that** different, adjustable values can be selected for the predetermined time period for identifying that a vehicle has stopped, depending on the operating state of the vehicle, in order to distinguish between a traffic-related and a voluntary stop.

17. Method according to one of Claims 1 to 16, **characterized in that** the title which is stored together with the current position comprises information which identifies the associated stop.

18. Method according to Claim 17, **characterized in that** the information which identifies the stop comprises data which identify the time and the nature of the stop.

19. Method according to one of Claims 1 to 18, **characterized in that** the position of a stop is stored together with the allocated title in a database of the circular buffer type.

20. Method according to Claim 19, **characterized in that**, in the database, the data for the oldest stop, that is to say its position and the information which identifies it, are overwritten by the data for the latest stop, that is to say the most recent stop, if the number of detected stops exceeds the number of available memory locations.

21. Method according to one of Claims 1 to 20, **characterized in that** the stored data for a detected stop can be selected, and **in that** the position data for the selected stop can be stored together with a freely selectable title, in particular a title which can be entered freely.

## Revendications

1. Procédé pour stocker des données de position, en particulier pour utilisation dans un système de service d'information de navigation et/ou routière, pour lequel
- la position actuelle est détectée à l'aide d'un système de détermination de position,
- à la position actuelle est affectée une dénomination, et
- la position actuelle avec la dénomination affectée est mémorisée, de manière que la position mémorisée puisse être sélectionnée à l'aide de la dénomination associée, **caractérisé en ce que** la dénomination est affectée à la position actuelle, dans le cas d'un arrêt.

2. Procédé selon la revendication 1, **caractérisé en ce que**, pour détecter la position actuelle, on utilise un système de détermination de position assistée par satellite, en particulier le système GPS (Global Positioning System).

3. Procédé selon la revendication 1 ou 2, **caractérisé en ce que** des données de position de la position détectée sont recalculées avant la mémorisation, sous un format de données convenant pour la suite de l'utilisation, en particulier dans un système de service de l'information routière respectif.

4. Procédé selon la revendication 1 ou 2, **caractérisé en ce que** les données de position de la position détectée sont mémorisées au format de données livré par le système de fixation de position.

5. Procédé selon les revendications 1 à 4, **caractérisé en ce que** la dénomination affectée à la position actuelle est susceptible d'être sélectionnée.

6. Procédé selon la revendication 5, **caractérisé en ce que** la dénomination est introduite par l'intermédiaire de l'unité d'introduction et est sélectionnée à l'aide de celle-ci.

7. Procédé selon la revendication 6, **caractérisé en ce que** la dénomination est introduite sous forme de chaîne de caractères alphanumériques, par l'intermédiaire d'un clavier.

8. Procédé selon la revendication 8, **caractérisé en ce que** la dénomination est introduite sous forme de chaîne de caractères alphanumériques, en sélectionnant les lettres et les chiffres individuellement d'après une liste.

9. Procédé selon la revendication 8, **caractérisé en ce que** la sélection des caractères alphanumériques d'après la liste se fait à l'aide d'un positionneur-pointeur à rotation et à pression.

10. Procédé selon l'une des revendications précédentes, **caractérisé en ce que** la dénomination est susceptible d'être sélectionnée d'après une liste existante de noms et/ou de désignations.

11. Procédé selon la revendication 10, **caractérisé en ce que** la liste existante est un annuaire téléphonique mémorisé d'une unité de télécommunication (11) utilisée pour l'échange de données avec une centrale du système de service d'information.

12. Procédé selon la revendication 11, **caractérisé en ce qu'**après sélection d'un nombre d'après l'annuaire téléphonique mémorisé, en tant que désignation de la position détectée, ses données de position sont liées à l'enregistrement sélectionné dans l'annuaire téléphonique.

13. Procédé selon la revendication 10, **caractérisé en ce que** la liste existante comprend des concepts prédéfinis, d'après lesquels on peut sélectionner une dénomination.

14. Procédé selon la revendication 1, **caractérisé en ce que** la position actuelle n'est mémorisée conjointement avec la dénomination que lorsque l'arrêt dure plus qu'une durée prédéterminée.

15. Procédé selon la revendication 14, **caractérisé en ce que** la durée prédéterminée est réglable.

16. Procédé selon la revendication 14 ou 15, **caractérisé en ce que**, pour la durée prédéterminée, pour identifier un arrêt d'un véhicule en fonction de l'état de fonctionnement du véhicule, on peut sélectionner différentes valeurs réglables, pour distinguer entre un arrêt, imputable à la circulation ou au trafic, et un arrêt volontaire.

17. Procédé selon l'une des revendications 1 à 16, **caractérisé en ce que** la dénomination, mémorisée conjointement avec la position actuelle, comprend l'information caractérisant l'arrêt afférent.

18. Procédé selon la revendication 17, **caractérisé en ce que** l'information caractérisant l'arrêt comprend des données caractérisant le moment et le type de l'arrêt.

19. Procédé selon l'une des revendications 14 à 18, **caractérisé en ce que** la position d'un arrêt est mémorisée, conjointement avec la dénomination affectée d'une banque de données de type à mémoire en anneau.

20. Procédé selon la revendication 19, **caractérisé en ce que** dans la bande de données, les données concernant l'arrêt le plus ancien, donc sa position et l'information le caractérisant, font l'objet d'une sur-écriture par les données du dernier arrêt, donc le plus récent, lorsque le nombre d'arrêts détecté est supérieur au nombre des emplacements mémoire disponible.

21. Procédé selon l'une des revendications 1 à 20, **caractérisé en ce que** les données mémorisées d'un arrêt détecté sont susceptibles d'être sélectionnées, et **en ce que** les données de position de l'arrêt sélectionné peuvent être mémorisées, conjointement avec une dénomination susceptible d'être choisie librement, en particulier susceptible d'être introduite librement.
